(19) Europäisches Patentamt
European Patent Office
Office européen des brevets

(11) **EP 1 847 577 B1**

(12) **EUROPÄISCHE PATENTSCHRIFT**

(45) Veröffentlichungstag und Bekanntmachung des Hinweises auf die Patenterteilung:
**11.05.2011 Patentblatt 2011/19**

(51) Int Cl.:
***C09J 7/02*** *(2006.01)*

(21) Anmeldenummer: **07004667.7**

(22) Anmeldetag: **07.03.2007**

(54) **Klebeband zur Verklebung von Folien im Bereich einer Gebäudehülle und Verwendung desselben**

Adhesive tape for adhering films in a building cladding and application of the same

Bande adhésive destinée au collage de feuilles dans la zone d'une enveloppe de bâtiment et son utilisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.04.2006 DE 102006018123**

(43) Veröffentlichungstag der Anmeldung:
**24.10.2007 Patentblatt 2007/43**

(73) Patentinhaber: **Silu Verwaltung AG**
**6045 Meggen (CH)**

(72) Erfinder:
• **Sieber, Marco**
**6048 Horw (CH)**
• **Sieber, Reto**
**6019 Sigigen (CH)**

(74) Vertreter: **Lang, Johannes et al**
**Bardehle Pagenberg**
**Galileiplatz 1**
**81679 München (DE)**

(56) Entgegenhaltungen:
**WO-A-01/42384 JP-A- 2002 194 304**

**Beschreibung**

Die Erfindung betrifft ein Klebeband zur Verklebung von Folien im Bereich einer Gebäudehülle, mit einem Trägermaterial und einer darauf angeordneten Haftkleberbeschichtung wie es z.B. aus der WO 01/42384 A oder der JP 2002 194 304 A bekannt ist. Ferner betrifft die Erfindung eine Verwendung eines solchen Klebebandes.

Allgemein werden im Außenbereich im Hausbau, insbesondere auf Dächern oder an Fassaden Folien, insbesondere Kunststofffolien, oder auch Platten, insbesondere aus Hartholz, als sog. "Winddichte" oder "Regenhaut" montiert. Solche Abdeckungen liegen dabei oberhalb der Dämmschicht und unterhalb der eigentlichen Eindeckung, welche z.B. aus Ziegeln, Eternitplatten oder ähnlichem besteht. In der Regel wird diese Abdeckschicht überlappend verlegt, wobei die entstehenden Fugen mit einseitigen Klebebändern abgeklebt werden. Somit wird verhindert, dass Wind, Schnee, Regen oder ähnliches zwischen der Außenschicht hindurch in offenliegende Fugen eindringen kann und es im Bereich der Dämmschicht zu Luftströmungen kommt. Solche Luftströmungen von kalter Außenluft würden die Dämmwirkung verringern, was möglichst vermieden werden soll.

Generell kommen für die Verklebung von Folien im Außenbereich im Hausbau gemäß dem Stand der Technik meist einseitig klebende Klebebänder zur Anwendung, welche insbesondere Träger aus Polyethylenfolien, PVC-Folien oder thermisch verdichteten Spinnfließträgerfolien aufweisen.

Generell müssen die für die im Außenbereich im Hausbau verwendeten Folien oder Platten sehr diffusionsoffen sein, wobei diese in der Regel einen $s_d$-Wert von ≤1 m aufweisen, gemessen nach DIN 52615. Die aus dem Stand der Technik bekannten, weitestgehend verwendeten Klebebänder zur Fugenverklebung solcher Platten oder Folien weisen in der Regel einen wesentlich höheren Wasserdampf-Diffusions-Widerstand auf und haben in der Regel $s_d$-Werte, die deutlich über den entsprechenden Werten der verwendeten Folien oder Platten liegen, beispielsweise liegen solche Werte für verwendete Klebebänder des Standes der Technik im Bereich von 20 - 50 m. In der Praxis zeigt sich bei Verwendung solcher Klebebänder des Standes der Technik, dass bei einem Austritt von diffundiertem Wasserdampf aus z.B. der Dachkonstruktion eines Hauses, bedingt durch eingeschlossene Baufeuchte oder Restfeuchte vom Konstruktionsholz, die Feuchtigkeit in Bereichen, in denen keine Fugenverklebung des Standes der Technik vorliegt, durch die sehr diffusionsoffenen Folien oder Platten gut entweichen kann, aber in Bereich direkt unter einer Fugenverklebung mit Klebebändern des Standes der Technik aufgrund des wesentlich diffusionsdichteren Klebebandes in diesem Bereich dort eine Kondenswasserbildung entlang der Fugenverklebung auftreten kann. Somit kann es, je nach Diffusionsgefälle, zu erheblichen Wasseransammlungen kommen, was in der Folge Fäulnis und Bauschäden verursachen kann. Insbesondere ist dies der Fall, wenn mehr Feuchtigkeit von unten nachströmt als aufgrund des durch die Fugenverklebung des Standes der Technik erhöhten Diffusionswiderstandes entweichen kann. Bei solcher Feuchtigkeit kann es sich um eingeschlossene Restfeuchte im Dach aufgrund feuchten Konstruktionsholzes handeln, oder um Raumfeuchte, welche durch eine nicht überall luftdicht verklebte innere Dampfbrems-Schicht immer wieder in die Dachkonstruktion nachströmt.

Insbesondere bei der Verwendung von Folien als zusätzliche wind- und regendichte Schicht im Außenbereich im Hausbau tritt das weitere Problem auf, dass diese Folien in Bahnen über die gesamte Dachkonstruktion oder entlang der gesamten Fassadenbreite oder -höhe gezogen werden müssen, so dass sich Wellenbildungen in einzelnen Folienbahnen aufgrund unterschiedlicher Spannungen kaum vermeiden lassen. Im Bereich der Fugen zwischen zwei Bahnen, die unterschiedlich gespannt sind oder entsprechende Wellen aufweisen, ist es somit eigentlich sehr wünschenswert, dass Klebebänder zum Einsatz kommen, welche über weiche, anschmiegsame und dehnfähige Trägermaterialien verfügen, welche aber auch ausreichend stabil sein sollten. Ansonsten können sich bei der Verlegung solcher Folien Fugenbereiche, welche vermeintlich dicht abgeklebt worden sind, durch die immanente Rückstellkraft des Folienmaterials wieder lösen und mit der Zeit eine Leckstelle in der Verklebung auftreten. Sehr weiche und flexible Trägermaterialien für Selbstklebebänder haben zwar den Vorteil, dass sie sich allen Unebenheiten dauerhaft anschmiegen können, jedoch leidet unter der relativen Weichheit und übermäßigen Flexibilität solcher Träger häufig die Verarbeitbarkeit und Stabilität.

Somit ergeben sich bei der Verklebung von Folien im Außenbereich im Hausbau für dort zu verwendende Klebebänder unterschiedliche, sich eigentlich ausschließende Anforderungen.

Verwendet man beispielsweise ein Klebeband gemäß dem Stand der Technik, welches als Trägermaterial eine so genannte Kunststoffmembran verwendet, bestehend beispielsweise aus Polymer-Folie, die mechanisch gereckt wird und somit mikroskopische Öffnungen aufweist, gewinnt ein solches Klebeband des Standes der Technik zwar an Diffusionsfähigkeit, andererseits verliert es seine Dehnfähigkeit und Elastizität, mithin also seine mechanische Belastbarkeit, was dazu führt, dass ein solches Klebeband zu schnell reißen würde. Zudem wäre ein solches Klebeband nicht mehr wasserdicht, da Regenwasser durch die mikroskopischen Öffnungen durchtreten könnte, was außerdem im Laufe der Zeit auch zu einer Anlösung des verwendeten Klebestoffes führen könnte. Verwendet man als Trägermaterial bei Klebebändern des Standes der Technik einen Vliesträger, so erreicht man dadurch zwar eine hohe Diffusionsfähigkeit, aber auch ein solches Klebeband wäre nicht mehr anschmiegsam und in der Regel nicht mehr wasserdicht. Verwendet man eine Beschichtung auf einem solchen Vliesträger, wäre es zwar wasserdicht, wäre aber immer noch unflexibel und nicht anschmiegsam, was zu den oben geschilderten Problemen beim Verkleben von Fugen von Folien im Außenbereich im Hausbau führen würde.

Es ist somit eine Aufgabe der vorliegenden Erfindung, ein Klebeband vorzusehen, insbesondere zur Verklebung von Folien im Bereich einer Gebäudehülle, welches die Nachteile von Klebebändern des Standes der Technik überwindet, insbesondere ein Klebeband vorzusehen, welches erfindungsgemäß verhältnismäßig einfach in seinem Aufbau ist und dennoch gute Dichtwirkung, Wasserdampfdurchlässigkeit und mechanische Stabilität bei gleichzeitig gegebener ausreichender Flexibilität und Anschmiegsamkeit bietet.

Diese Aufgabe wird erfindungsgemäß gelöst durch ein Klebeband mit den Merkmalen gemäß Anspruch 1, sowie eine Verwendung eines Klebebandes gemäß Anspruch 10. Vorteilhafte Ausführungsformen des erfindungsgemäßen Klebebandes sind in den Unteransprüchen definiert.

Das erfindungsgemäße Klebeband zur Verklebung von Folien im Bereich einer Gebäudehülle, insbesondere im Außenbereich im Hausbau, weist ein Trägermaterial und eine darauf angeordnete Haftkleberbeschichtung auf Das erfindungsgemäße Klebeband ist diffusionsoffen mit einem Diffusionswidersand mit einem $_{sd}$-Wert von $\leq 12$ m, gemessen nach DIN 52615. Der angegebene $_{sd}$-Wert bezieht sich dabei auf den Wert für das gesamte Klebeband, bestehend aus Trägermaterial und Haftkleberbeschichtung. Erfindungsgemäß ist das Trägermaterial des Klebebandes elastisch dehnbar mit einem Differenzwert zwischen der prozentualen Gesamtdehnung bei Belastung Eg und der prozentualen, bleibenden Dehnung nach Belastung $\varepsilon_b$ im Bereich von 6 bis 80. Die jeweiligen Prozentwerte unterscheiden sich also bei entsprechender Differenzbildung um 6 bis 80 Prozentpunkte. Wird beispielsweise eine Differenz von 70% zu 10% gebildet, so beträgt der erfindungsgemäße Parameterwert der Differenz 70%-10%=60 bzw. 60 Prozentpunkte.

Erfindungsgemäß ist das Trägermaterial eine Kunststofffolie mit zumindest einer Schicht ist. Es kann sich auch um eine Kunststofffolie mit mehreren, insbesondere bevorzugt mit 3 Schichten, handeln. Dabei besteht diese Kunststofffolie im Wesentlichen aus Ethylen-Vinyl-Acetat (EVA) und einem thermoplastisch-elastomeren Ether-Ester-Blockcopolymer (TPE-E), wobei bevorzugt ein oder mehrere Zusätze enthalten sind aus der Gruppe der Füllstoffe, Verarbeitungsmittel, Gleitmittel, Antiblockmittel und Farbmittel. Dabei können bevorzugt mehrere zumindest im Wesentlichen aus EVA und TPE-E bestehende Schichten vorgesehen sein, wobei der oder die Zusätze lediglich einem Teil der Schichten zugesetzt ist/sind. Bevorzugt kann der TPE-E-Anteil in der zumindest einen Schicht mindestens 10 Gewichts-%, vorzugsweise mehr als 25 Gewichts-% betragen. Eine solche erfindungsgemäß bevorzugte Kunststofffolie bietet eine hohe und gleichzeitig genau einstellbare Wasserdampfdurchlässigkeit und erfindungsgemäß gut einstellbare mechanische Eigenschaften.

Das erfindungsgemäße Klebeband ist somit zum einen sehr diffusionsoffen und dabei ausreichend dehnbar und stabil, was durch den erfindungsgemäß neu entdeckten Parameter des Differenzwertes zwischen der prozentualen Gesamtdehnung bei Belastung und der prozentualen bleibenden Dehnung nach Belastung eines für das erfindungsgemäße Klebeband verwendeten Trägermaterials zum Ausdruck kommt. Einerseits ist somit, wie gesagt, die mechanische Stabilität gewährleistet, d.h., die bleibende Dehnung nach Belastung ist im Verhältnis zur prozentualen Gesamtdehnung bei Belastung in der Differenz im Unterschied nie kleiner als 6 Prozentpunkte und nie größer als 80 Prozentpunkte.

Das Trägermaterial des erfindungsgemäßen Klebebandes kann bevorzugt einen Differenzwert im Bereich von 7 - 70 aufweisen, bevorzugter im Bereich zwischen 8 - 65, besonders bevorzugt im Bereich zwischen 12 - 60.

Zur Ermittlung der erfindungsgemäßen elastischen Dehnungseigenschaften wird eine Bestimmung in Anlehnung an die DIN-Norm DIN 53360 herangezogen, wobei eine Längenänderung von einem 25 mm breiten Probenstreifen unter einer statischen Last von 1 kg für 30 Minuten und eine Längenänderung nach Entlastung des Probenstreifens ermittelt werden. Aus diesen beiden Werten lässt sich, wie erfindungsgemäß erstmals vorgenommen, als Parameter eine Differenz aus der Gesamtdehnung und der bleibenden Dehnung berechnen, welche, wie erfindungsgemäß gefunden wurde, ein gutes Maß für die elastischen Eigenschaften eines solche Probenstreifens ist.

Aus Trägermaterialproben werden längs zur Herstellrichtung je 3 Probekörper von 25 mm Breite und mindestens 250 mm Länge entnommen. Auf den Probekörpern wird mit zwei dünnen Markierungen eine Messlänge von 100 ± 0.5 mm eingezeichnet. Die eingezeichneten Messmarken müssen auf den Probekörpern im gleichen Abstand zu den Probekörper-Enden liegen. An den Marken ist der Verlauf der Längsachse einzuzeichnen.

Die Gesamtdehnung $\varepsilon_g$ einer Probe ist das Verhältnis der Gesamtlängenänderung $\Delta L_g$ zur ursprünglichen Messlänge des Probekörpers $L_0$. Dabei ist die Gesamtlängenänderung $\Delta L_g$ der Unterschied zwischen der Messlänge bei konstanter Zugbeanspruchung nach einer bestimmten Beanspruchungsdauer und der ursprünglichen Messlänge des Probekörpers $L_0$.

Die bleibende Dehnung $\varepsilon_b$ ist das Verhältnis der bleibenden Längenänderung $\Delta L_b$ zur ursprünglichen Messlänge des Probekörpers $L_0$. Dabei ist die bleibende Längenänderung $\Delta L_b$ nach Entlastung der Unterschied zwischen der Messlänge, nach der Entlastung des Probekörpers, d.h. nach Wegnahme der Zugbeanspruchung nach einer festgelegten Zeitdauer und der ursprünglichen Messlänge des Probekörpers $L_0$.

Die Prüfungen werden bei einer Bedingung von 23 +/- 2 Grad Celsius und einer relativen Luftfeuchte von 50 % durchgeführt. Die Proben sind vor den Messungen für 24 Stunden im gleichen Klima zu akklimatisieren. Die 25 mm breiten Probestreifen werden an einer oberen Klemmbacke eingespannt, das untere Ende wird mit einer Klemme und einem Gewicht von 1 kg belastet. Nach 30 Minuten wird der Abstand der Messmarken, unter Zugspannung, abgelesen. Nach Entlastung, d.h. Wegnehmen des 1-kg-Gewichtes, wird nach weiteren 30 Minuten wieder die Dehnung gemessen.

Aus diesen Werten lassen sich die Gesamtdehnung und die bleibende Dehnung in % ausrechnen

$$\varepsilon_g = \frac{\Delta L_g}{L_0} \cdot 100 \qquad (1)$$

$$\varepsilon_b = \frac{\Delta L_b}{L_0} \cdot 100 \qquad (2)$$

Danach wird die Differenz zwischen der Gesamtdehnung (statische Dehnung) und der bleibenden Dehnung bestimmt.

$$\Delta \varepsilon_g, \varepsilon_b = \varepsilon_g - \varepsilon_b \qquad (3)$$

Tabelle 1 zeigt Messwerte der o.g. Dehnungen. Die resultierenden Dehnungen mit Belastung und die bleibende Dehnung in Prozent sind in den entsprechenden Spalten wiedergegeben. Die letzte Spalte gibt die Differenz zwischen der Dehnung mit Belastung und der bleibenden Dehnung an nach Gleichung (3) an.

Tabelle 1: Elastische Eigenschaften verschiedener Folien

|  | $L_0$[mm] | $L_g$[mm] | $L_b$[mm] | $\varepsilon_g$[%] | $\varepsilon_b$[%] | $\Delta\varepsilon_g,\varepsilon_b$ |
|---|---|---|---|---|---|---|
| Erfindungsgemäße Trägerfolie 100 $\mu$m | 100.01 | 113.92 | 100.58 | 13.91 | 0.57 | **13.34** |
| Erfindungsgemäße Trägerfolie 70 $\mu$m | 99.53 | 170.03 | 114.91 | 70.83 | 15.45 | **55.38** |
| Polystyrol-Folie 70 $\mu$m | 99.52 | 100.11 | 99.98 | 0.59 | 0.46 | **0.13** |
| Polyethylen Folie 40 $\mu$m | 100.1 | **Bruch** | - | - | - | - |
| Polyethylen Folie 70 $\mu$m | 98.1 | 105.3 | 100.27 | 7.34 | 2.21 | **5.13** |
| Polyethylen Folie 200 $\mu$m | 100.9 | 102.38 | 100.15 | 1.47 | -0.74 | **2.21** |
| Polyamid Folie 50 $\mu$m | 98.37 | 101.04 | 99.85 | 2.71 | 1.50 | **1.21** |

Die elastischen Trägermaterialproben gemäß der Erfindung zeichnen sich dadurch aus, dass aus der Differenz zwischen der Dehnung mit Belastung und bleibender Dehnung, sehr hohe Werte resultieren, welche aber auch nicht kleiner als 6 sind. Herkömmliche Trägermaterialien, wie Polyamid oder Polystyrol, zeigen da hingegen sehr kleine Werte. Dünne PE-Folien zeichnen sich dadurch aus, dass sie ab einer Belastung von 1 kg reißen oder sich sehr weit dehnen und sich nicht wieder zurückziehen. Dadurch bleibt auch bei den typischen Polyethylenfolien die Differenz zwischen der Dehnung mit Belastung und der bleibenden Dehnung klein.

Das Trägermaterial des erfindungsgemäßen Klebebandes kann gemäß einem Pinhole-Test ein geschlossenes Material sein, wobei das Trägermaterial bevorzugt keine Perforationsöffnungen, auch nicht nur durch einen Teil der Dicke von ihm, aufweist.

Der Pinhole-Test geht dabei folgendermaßen vonstatten:

Das erfindungsgemäße Trägermaterial wird mit einer speziellen Pinhole-Testlösung bestrichen, bestehend aus 500 Teilen Terpentinöl, 500 Teilen Petroleum und 0,5 Teilen des Farbstoffes "Sudanrot". Mit dieser Pinhole-Testlösung lassen sich auch kleinste Mikroperforationen in Folienmaterialien nachweisen. Für den Test der Wasserdichtheit, bzw. für den Test, ob es sich bei dem Trägermaterial erfindungsgemäß bevorzugt um ein geschlossenes Material handelt, wird das zu testende Material auf einem weißen, saugfähigen Material ausgebreitet. Danach wird das Trägermaterial mit der Pinhole-Testlösung benetzt. Die Pinhole-Testlösung wird danach mit einem Pinsel auf dem Trägermaterial bestrichen. Nach 5 Minuten wird das Trägermaterial weggenommen und das weiße, saugfähige Material darunter optisch analysiert. Eine Rotfärbung, die auch nur stellenweise auftreten kann, signalisiert, dass es sich bei dem Trägermaterial um ein Material handelt, welches nicht geschlossen ist, d.h. welches z.B. Mikroperforationen aufweist, wobei ein solches Trägermaterial nicht wasserdicht ist. Geschlossene Trägermaterialien im Sinne der bevorzugten Ausführungsform der Erfindung zeichnen sich dadurch aus, dass beim Pinhole-Test das saugfähige weiße Material auch nach dem Test keine rötlichen Verfärbungen aufweist.

Besonders bevorzugt ist eine Ausführungsform des erfindungsgemäßen Klebebandes, bei welcher das Trägermaterial wasserdicht für Regenwasser ist.

Der Diffusionswiderstand des erfindungsgemäßen Klebebandes liegt bevorzugt bei einem $_{sd}$-Wert ≤10 m, bevorzugt bei einem $_{sd}$-Wert ≤8 m, und besonders bevorzugt bei einem $_{sd}$-Wert ≤5 m, jeweils gemessen nach DIN 52615.

Die Haftkleberbeschichtung des erfindungsgemäßen Klebebandes ist bevorzugt aus der Gruppe, bestehend aus Klebstoff, Schmelz-Halftkleber, Dispersions-Haftkleber, Lösemittel-Haftkleber, Acrylat-Haftkleber, Silikon-Haftkleber oder Kautschuk-Haftkleber. Es sei angemerkt, dass selbstverständlich auch die Haftbeschichtung so gewählt werden kann, dass im Zusammenwirken mit den erfindungsgemäßen mechanischen Eigenschaften des Trägermaterials ein entsprechend zuverlässig und im Ergebnis dauerhaft sicher wirkendes Klebeband erfindungsgemäß vorgesehen ist.

Das erfindungsgemäße Klebeband weist bevorzugt eine Dicke des Trägermaterials von 40-200 μm, bevorzugter im Bereich von 45-120 μm, noch bevorzugter im Bereich von 50-100 μ und am meisten bevorzugt im Bereich von 55-90 μm auf.

Das erfindungsgemäße Klebeband kann eine Breite im Bereich von 30 mm bis 1000 mm aufweisen, bevorzugt im Bereich von 35 mm bis 600 mm, bevorzugter im Bereich von 40 mm bis 400 mm und besonders bevorzugt im Bereich von 50 mm bis 150 mm. Somit ist eine optimale Verarbeitbarkeit unter allen auftretenden Gegebenheiten gegeben.

Zur weiteren mechanischen Verstärkung kann das erfindungsgemäße Klebeband ein Fadenmaterial aufweisen, welches besonders bevorzugt in die Haftkleberbeschichtung eingebettet ist, bzw. besonders bevorzugt an der Seite des Trägermaterials angeordnet ist, auf welcher sich auch die Haftkleberbeschichtung befindet.

Das Klebeband der Erfindung, insbesondere mit den vorher beschriebenen Ausführungsformen, kann verwendet werden zum Verkleben von Folien im Hausbau im Außenbereich, bevorzugt im Bereich von Dächern und Fassaden.

Die Erfindung wird im Folgenden anhand beispielhafter Ausführungsformen im Zusammenhang mit den beigefügten Figuren näher erläutert werden.

Fig. 1    ist eine geschnittene Seitenansicht eines Ausschnitts eines Klebebandes gemäß einer ersten Ausführungsform der Erfindung;

Fig. 2    ist eine geschnittene Seitenansicht eines Ausschnitts eines Klebebandes gemäß einer zweiten Ausführungsform der vorliegenden Erfindung; und

Fig. 3    ist eine geschnittene Seitenansicht eines Ausschnitts eines Klebebandes gemäß einer dritten Ausführungsform der Erfindung.

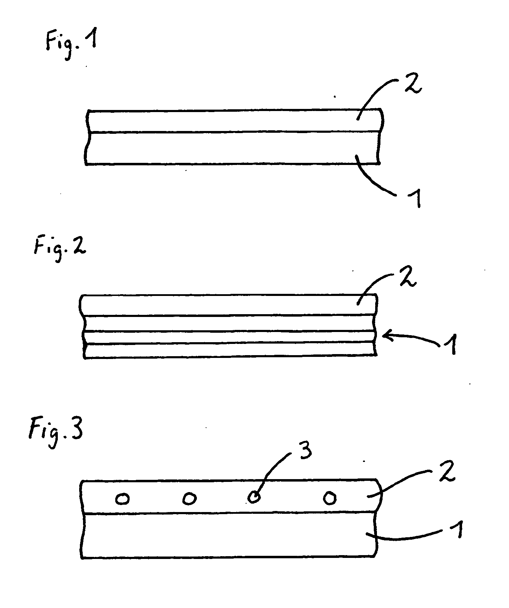

Fig. 1 zeigt in einer geschnittenen Seitenansicht einen Ausschnitt eines erfindungsgemäßen Klebebandes gemäß einer Ausführungsform der Erfindung. Dabei ist auf einem einschichtigen Trägermaterial 1 eine Haftkleberbeschichtung 2 angeordnet. Das Trägermaterial 1 ist, wie gesagt, als Einzelschicht ausgeführt. Das Trägermaterial 1 ist ein geschlossenes Material, welches keine Perforationsöffnungen, auch nicht teilweise, dort hindurch aufweist. Erfindungsgemäß ist das Klebeband diffusionsoffen mit einem Diffusionswiderstand mit einen $_{sd}$-Wert ≤ 12 m und das Trägermaterial 1 ist elastisch dehnbar mit einem Differenzwert zwischen der prozentualen Gesamtdehnung bei Belastung $\varepsilon_g$ und der prozentualen, bleibenden Dehnung nach Belastung $\varepsilon_b$ im Bereich von 6 bis 80. Das erfindungsgemäße Klebeband kann zum Verkleben von Folien im Außenbereich im Hausbau Verwendung finden, bevorzugt im Bereich von Dächern und Fassaden.

Fig. 2 zeigt eine weitere bevorzugte Ausführungsform des erfindungsgemäßen Klebebandes, wobei dort auf einem Trägermaterial 1, welches aus einem Dreischichtaufbau besteht, die Haftkleberbeschichtung 2 aufgebracht ist. Ansonsten entspricht das in Fig. 2 gezeigte Klebeband in seinen Eigenschaften demjenigen, welches in Fig. 1 gezeigt ist, lediglich mit dem Unterschied, dass das Trägermaterial 1 als dreischichtiges Trägermaterial aufgebaut ist. Dabei ist anzumerken, dass das Trägermaterial 1, wie in Fig. 2 dargestellt, erfindungsgemäß ein geschlossenes Material ist, welches keine Perforationsöffnungen durch das gesamte Trägermaterial 1 aufweist.

Fig. 3 zeigt eine weitere bevorzugte Ausführungsform eines erfindungsgemäßen Klebebandes in einer geschnittenen Ausschnittsweisen Seitenansicht. Die in Fig. 3 gezeigte Ausführungsform entspricht im Wesentlichen der in Fig. 1 gezeigten Ausführungsform, wobei in die Haftkleberbeschichtung 2 zusätzlich ein Fadenmaterial 3 als Fadengelege eingelegt ist, welches zusätzliche Stabilität verleiht.

Die Anordnung des Fadenmaterials kann dabei in Form von ungewebten Fäden, gewebten Fäden oder auf sonstige Weise vorgenommen sein.

Das erfindungsgemäße Klebeband, welches in beispielhaften Ausführungsformen in den Fig. 1 bis 3 gezeigt ist, bietet bei relativ einfacher Gestaltung eine optimale Verarbeitbarkeit und zeitlich konstante, zuverlässige Verklebung von Folien im Außenbereich im Hausbau.

**Patentansprüche**

1. Klebeband zur Verklebung von Folien im Bereich einer Gebäudehülle, mit einem Trägermaterial (1) und einer darauf angeordneten Haftkleberbeschichtung (2), wobei das Klebeband diffusionsoffen mit einem Diffusionswiderstand mit einem $s_d$-Wert von $\leq 12$ m, gemessen nach DIN 52615, ist und wobei das Trägermaterial (1) elastisch dehnbar ist mit einem Differenzwert zwischen der prozentualen Gesamtdehnung bei Belastung $\varepsilon_g$ und der prozentualen, bleibenden Dehnung nach Belastung $\varepsilon_b$ im Bereich von 6 bis 80, **dadurch gekennzeichnet, dass** das Trägermaterial (1) eine Kunststofffolie mit zumindest einer Schicht ist, und die Kunststofffolie im Wesentlichen aus einer Mischung aus Ethylen-Vinyl-Acetat (EVA) und einem thermoplastisch-elastomeren Ether-Ester-Blockcopolymer (TPE-E) besteht, wobei bevorzugt ein oder mehrere Zusätze enthalten sind aus der Gruppe Füllstoffe, Verarbeitungshilfsmittel, Gleitmittel, Antiblockmittel und Farbmittel.

2. Klebeband nach Anspruch 1, **dadurch gekennzeichnet, dass** der Differenzwert im Bereich zwischen 7 bis 70 liegt, bevorzugter im Bereich zwischen 8 bis 65 liegt, besonders bevorzugt im Bereich zwischen 12 bis 60 liegt.

3. Klebeband nach Anspruch 1 oder 2, **dadurch gekennzeichnet, dass** das Trägermaterial (1) gemäß einem Pinhole-Test ein geschlossenes Material ist, wobei es bevorzugt keine Perforationsöffnungen aufweist.

4. Klebeband nach einem der Ansprüche 1 bis 3, **dadurch gekennzeichnet, dass** das Trägermaterial (1) wasserdicht für Regenwasser ist.

5. Klebeband nach einem der Ansprüche 1 bis 4, **dadurch gekennzeichnet, dass** der $S_d$-Wert $\leq 10$ m ist, bevorzugter $\leq 8$ m ist, und besonders bevorzugt $\leq 5$ m ist.

6. Klebeband nach einem der Ansprüche 1 bis 5, **dadurch gekennzeichnet, dass** die Haftkleberbeschichtung (2) aus der Gruppe ist, bestehend aus Klebstoff, Schmelz-Haftkleber, Dispersions-Haftkleber, Lösemittel-Haftkleber, Acrylat-Haftkleber, Silikon-Haftkleber oder Kautschuk-Haftkleber.

7. Klebeband nach einem der Ansprüche 1 bis 6, **dadurch gekennzeichnet, dass** das Trägermaterial (1) eine Dicke im Bereich von 40 bis 200 $\mu$m, bevorzugt im Bereich von 45 bis 120 $\mu$m, bevorzugter im Bereich von 50 bis 100 $\mu$m und noch bevorzugter im Bereich von 55 bis 90 $\mu$m aufweist.

8. Klebeband nach einem der Ansprüche 1 bis 7, **dadurch gekennzeichnet, dass** das Klebeband eine Breite im Bereich von 30 mm bis 1000 mm, bevorzugt im Bereich von 35 mm bis 600 mm, bevorzugter im Bereich von 40 mm bis 400 mm und besonders bevorzugt im Bereich von 50 mm bis 150 mm aufweist.

9. Klebeband nach einem der Ansprüche 1 bis 8, **dadurch gekennzeichnet, dass** das Klebeband ein Fadenmaterial (3) aufweist.

10. Verwendung eines Klebebandes nach einem der Ansprüche 1 bis 9 zum Verkleben von Folien im Hausbau im Außenbereich, bevorzugt im Bereich von Dächern und Fassaden.

**Claims**

1. Adhesive strip for the bonding of sheeting in the area of a building envelope, with a carrier material (1) and an adhesive coating (2) arranged on this carrier material, whereby the adhesive strip is permeable with a defusion resistance with an $S_d$ value of $\leq 12$ m, measured according to DIN 52615, and whereby the carrier material (1) can elongate elastically with a difference value between the percentage of total elongation under loading $\varepsilon_g$ and the percentage of permanent elongation after loading $\varepsilon_b$ in the range from 6 to 80, **characterized in that** the carrier material (1) is a plastic sheeting with at least one layer, and the plastic sheeting is composed essentially from a mixture of ethylenevinyl-acetate (EVA) and a thermoplastic elastomeric ether-ester block copolymer (TPE-E), wherein preferably one or more additives are included from the group of fillers, auxiliary products, sliding agents, antiblocking agents and dies.

**2.** Adhesive strip according to claim 1, **characterized in that** the difference value lies in the range of between 7 and 70, preferably in the range of between 8 and 65, especially preferably in the range of between 12 and 60.

**3.** Adhesive strip according to claim 1 or 2, **characterized in that** the carrier material (1) according to a pin-hole test is a closed material, wherein it preferably has no perforations.

**4.** Adhesive strip according to one of the claims 1 to 3, **characterized in that** the carrier material (1) is watertight for rain water.

**5.** Adhesive strip according to one of the claims 1 to 4, **characterized in that** the $S_d$ value is $\leq 10$ m, more preferably $\leq 8$ m, and especially preferably $\leq 5$ m.

**6.** Adhesive strip according to one of the claims 1 to 5, **characterized in that** the adhesive strip coating (2) is from the group composed of bonding agents, fusing adhesives, dispersion adhesives, solvent adhesives, acrylate adhesives, silicon adhesives, or rubber adhesives.

**7.** Adhesive strip according to one of the claims 1 to 6, **characterized in that** the carrier material (1) has a thickness in the range of 40 to 200 $\mu$m, preferably in the range of 45 to 120 $\mu$m, more preferably in the range of 50 to 100 $\mu$m, and even more preferable in the range of 55 to 90 $\mu$m.

**8.** Adhesive strip according to one of the claims 1 to 7, **characterized in that** the adhesive strip has a width in the range of 30 mm to 1000 mm, preferably in the range of 35 mm to 600 mm, more preferably in the range of 40 to 400 mm, and especially preferably in the range of 50 to 150 mm.

**9.** Adhesive strip according to one of the claims 1 to 8, **characterized in that** the adhesive strip has a thread material (3).

**10.** Use of an adhesive strip according to one of the claims 1 to 9 for the bonding of sheeting in house construction in the outer area, preferably in the area of roofs and facades.

**Revendications**

**1.** Ruban adhésif pour coller des feuilles dans le domaine de l'enveloppe d'un bâtiment, comportant un matériau support (1) et un revêtement (2), disposé pardessus, constitué d'un adhésif de contact, le ruban adhésif étant ouvert à la diffusion, avec une résistance à la diffusion $s_d \leq 12$ m, mesurée selon DIN 52615, le matériau support (1) pouvant subir une dilatation élastique, avec une différence entre la dilatation totale en pourcentage sous une charge $\varepsilon_g$ et la dilatation résiduelle en pourcentage après application d'une charge $\varepsilon_b$, comprise dans la plage de 6 à 80, **caractérisé en ce que** le matériau support (1) est une feuille plastique comportant au moins une couche, et la feuille plastique est pour l'essentiel constituée d'un mélange d'éthylène-acétate de vinyle (EVA) et d'un copolymère à blocs éther-ester thermoplastique-élastomère (TPE-E), avec de préférence la présence d'un ou plusieurs additifs choisis dans le groupe consistant en les matières de charge, les auxiliaires de mise en oeuvre, les lubrifiants, les agents anti-adhérents et les substances colorantes.

**2.** Ruban adhésif selon la revendication 1, **caractérisé en ce que** la différence est comprise dans la plage de 7 à 70, de préférence dans la plage de 8 à 65 et d'une manière particulièrement préférée dans la plage de 12 à 60.

**3.** Ruban adhésif selon la revendication 1 ou 2, **caractérisé en ce que** le matériau support (1) est, d'après un essai de détermination des trous d'épingle, un matériau fermé, ne présentant de préférence aucune perforation.

**4.** Ruban adhésif selon l'une des revendications 1 à 3, **caractérisé en ce que** le matériau support (1) est étanche à l'eau de pluie.

**5.** Ruban adhésif selon l'une des revendications 1 à 4, **caractérisé en ce que** la $S_d$ est $\leq 10$ m, de préférence $\leq 8$ m et d'une manière particulièrement préférée $\leq 5$ m.

**6.** Ruban adhésif selon l'une des revendications 1 à 5, **caractérisé en ce que** le revêtement adhésif de contact (2) est choisi dans le groupe consistant en les adhésifs, les adhésifs de contact fusibles, les adhésifs de contact en dispersion, les adhésifs de contact en solution, les adhésifs de contact de type acrylate, les adhésifs de contact de type silicone ou les adhésifs de contact du type caoutchouc.

7.  Ruban adhésif selon l'une des revendications 1 à 6, **caractérisé en ce que** le matériau support (1) a une épaisseur comprise dans la plage de 40 à 200 μm, de préférence dans la plage de 45 à 120 μm, plus particulièrement dans la plage de 50 à 100 μm et d'une manière encore plus préférée dans la plage de 55 à 90 μm.

8.  Ruban adhésif selon l'une des revendications 1 à 7, **caractérisé en ce que** le ruban adhésif a une largeur comprise dans la plage de 30 à 1000 mm, de préférence dans la plage de 35 à 600 mm, d'une manière particulièrement préférée dans la plage de 40 à 400 mm et d'une manière tout particulièrement préférée dans la plage de 50 à 150 mm.

9.  Ruban adhésif selon l'une des revendications 1 à 8, **caractérisé en ce que** le ruban adhésif comprend un matériau de type fil (3).

10. Utilisation d'un ruban adhésif selon l'une des revendications 1 à 9 pour coller des feuilles dans la construction de maisons en extérieur, de préférence dans le secteur des toits et des façades.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0142384 A
- JP 2002194304 A